# EUROPÄISCHE PATENTANMELDUNG

(11) **EP 3 968 498 A1**
(43) Veröffentlichungstag der Anmeldung: **16.03.2022**
(21) Anmeldenummer: 21195580.2
(22) Anmeldetag: 08.09.2021
(51) Int. Cl.: H02K 1/276, H02K 29/03, H02K 7/04

(54) **ROTOR EINER ELEKTRISCHEN MASCHINE MIT VERBESSERTER STAFFELUNG DER ROTORSEGMENTE**

(30) Priorität: 11.09.2020 DE 102020211452
(71) Anmelder: Valeo Siemens eAutomotive Germany GmbH, 91056 Erlangen (DE)
(72) Erfinder: Beetz, Sebastian, 97616 Bad Neustadt a.d.Saale (DE); Dotz, Boris, 97616 Bad Neustadt a.d.Saale (DE); Förster, David, 97616 Bad Neustadt a.d.Saale (DE); Finger-Albert, Christian, 97616 Bad Neustadt a.d.Saale (DE)

(57) **Zusammenfassung**

Es wird ein Rotor (3a..3c) für eine elektrische Maschine (1) angegeben, welcher mehrere entlang der Rotationsachse (x) des Rotors (3a..3c) hintereinander angeordnete Rotorsegmente (10a..10c, 10a', 10a", 10..10''') umfasst, welche jeweils ein Rotorblech (11) oder mehrere Rotorbleche (11) aufweisen. Magnetische Pole (A..D) zweier benachbarter Rotorsegmente (10a..10c, 10a', 10a", 10..10''') sind um die Rotationsachse (x) des Rotors (3a) um einen Staffelungswinkel (α) gegeneinander verdreht, wobei der Staffelungswinkel (α) kleiner ist als ein zwischen zwei magnetischen Polen (A..D) eines Rotorsegments
(10a..10c, 10a', 10a", 10..10''') liegender Polwinkel (β). Der Rotor (3a..3c) umfasst zumindest zwei auf einem ersten Lochkreis (L1) um die Rotationsachse (x) des Rotors (3a..3c) angeordnete erste Ausnehmungen (12), die jeweils um einen Winkel (y) gegeneinander verdreht sind, welcher dem Polwinkel (β) abzüglich oder zuzüglich dem Staffelungswinkel (α) entspricht. Weiterhin wird eine elektrische Maschine (1) mit einem solchen Rotor (3a..3c) angegeben, sowie ein Fahrzeug (18) mit einer solchen elektrischen Maschine (1).

## Beschreibung

### TECHNISCHES GEBIET

Die Erfindung betrifft einen Rotor für eine elektrische Maschine, der mehrere entlang der Rotationsachse des Rotors hintereinander angeordnete Rotorsegmente umfasst, welche jeweils ein Rotorblech oder mehrere Rotorbleche aufweisen, wobei magnetische Pole zweier benachbarter Rotorsegmenten um die Rotationsachse des Rotors um einen Staffelungswinkel gegeneinander verdreht sind. Der Staffelungswinkel ist dabei kleiner als ein zwischen zwei magnetischen Polen eines Rotorsegments liegender Polwinkel. Der Polwinkel ergibt sich durch Division eines Vollkreises (=360°) durch die Anzahl der magnetischen Pole eines Rotorsegments. Weiterhin wird eine elektrische Maschine mit einem solchen Rotor angegeben, sowie ein Fahrzeug mit einer solchen elektrischen Maschine.

### STAND DER TECHNIK

Bei elektrischen Maschinen ist es bekannt, Rotorsegmente eines Rotors gegeneinander zu verdrehen, um im Betrieb der elektrischen Maschine einen Drehmomentverlauf zu erzielen, welcher gegenüber einem Drehmomentverlauf einer elektrischen Maschine mit axial ausgerichteten Rotorsegmenten geringere Drehmomentschwankungen aufweist. Zwar wurden im Stand der Technik einige Verfahren zur Herstellung eines solchen Rotors angegeben, es fehlt aber eine einfache Möglichkeit zur Ausrichtung der Rotorsegmente, welche eine Vielzahl von Winkelstellungen der magnetischen Pole eines Rotors ermöglicht und welche insbesondere mit identisch aufgebauten Rotorblechen des Rotors erreicht werden kann.

### OFFENBARUNG DER ERFINDUNG

Eine Aufgabe der Erfindung ist es daher, einen verbesserten Rotor für eine elektrische Maschine, eine verbesserte elektrische Maschine sowie ein verbessertes Fahrzeug mit einer solchen elektrischen Maschine anzugeben. Insbesondere soll die Verdrehung von Rotorsegmenten eines Rotors (d.h. das "Skewing") erleichtert werden.

Die Aufgabe der Erfindung wird mit einem Rotor der eingangs genannten Art gelöst, welcher zumindest zwei auf einem ersten Lochkreis um die Rotationsachse des Rotors angeordnete erste Ausnehmungen aufweist, die jeweils um einen Winkel gegeneinander verdreht sind, welcher dem Polwinkel abzüglich oder zuzüglich dem Staffelungswinkel entspricht.

Die Aufgabe der Erfindung wird auch mit einer elektrischen Maschine gelöst, welche einen Stator umfasst, sowie einen Rotor der oben genannten Art, der gegenüber dem Stator um die Rotationsachse des Rotors drehbar gelagert ist.

Schließlich wird die Aufgabe auch durch ein Fahrzeug mit wenigstens zwei Achsen gelöst, von denen wenigstens eine angetrieben ist, wobei der besagte Antrieb zumindest teilweise oder zeitweise durch die oben genannte elektrische Maschine erfolgt.

Mit Hilfe der vorgeschlagenen Maßnahmen können die eingangs genannten Nachteile überwunden werden. Insbesondere ermöglicht die vorgeschlagene Anordnung das einfache Ausrichten der Rotorsegmente, wobei eine Vielzahl von Winkelstellungen der magnetischen Pole eines Rotors ermöglicht wird und welche insbesondere mit identisch aufgebauten Rotorblechen des Rotors aufgebaut werden kann. Konkret brauchen nur verschiedene erste Ausnehmungen der Rotorsegmente in Deckung gebracht werden, um eine vorgegebene Verdrehung der Rotorsegmente zu erreichen. Die ersten Ausnehmungen können zum Beispiel durch zylindrische Löcher gebildet sein, im Grunde können die ersten Ausnehmungen aber eine beliebige Form annehmen. Erste Ausnehmungen, die bei Verdrehung von Rotorsegmenten um den Staffelungswinkel oder um ein ganzzahliges Vielfaches des Staffelungswinkels in Deckung gebracht werden, sollten aber alle eine einheitliche Form aufweisen.

Eine bestimmte Winkelstellung kann beispielsweise dadurch gesichert werden, dass ein Stift durch die ersten Ausnehmungen mehrerer Rotorsegmente hindurch geführt wird. Dieser Stift kann die Ausrichtung bei der Herstellung des Rotors erleichtern und nach der Fertigstellung desselben wieder entfernt werden, oder der Stift kann auch im Rotor verbleiben. Auch das Anbringen mehrere Stifte ist natürlich möglich. Die genannten Stifte können gleichzeitig auch als Zuganker ausgebildet sein und die Rotorsegmente axial sichern. Es können hierzu aber natürlich auch gesonderte Zuganker eingesetzt werden.

Grundsätzlich ist es auch möglich, dass die vorgeschlagenen Maßnahmen für eine Gruppe von ersten Ausnehmungen gelten. Der Rotor weist dann zumindest zwei Gruppen von auf einem ersten Lochkreis um die Rotationsachse des Rotors angeordneten ersten Ausnehmungen auf, wobei die Gruppen jeweils um einen Winkel gegeneinander verdreht sind, welcher dem Polwinkel abzüglich oder zuzüglich dem Staffelungswinkel entspricht. Die erwähnten Vorteile gelten sinngemäß.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn der Rotor zumindest n/2 auf dem ersten Lochkreis angeordnete erste Ausnehmungen (oder n/2 Gruppen erster Ausnehmungen) aufweist, von denen wenigsten n/2-1 erste Ausnehmungen (oder Gruppen) jeweils um einen Winkel gegeneinander verdreht sind, welcher dem Polwinkel abzüglich oder zuzüglich dem Staffelungswinkel entspricht, wobei n die Anzahl der magnetischen Pole eines Rotorsegments angibt. Dadurch können alle Rotorsegmente jeweils um einen vorgebbaren Winkel gegeneinander verdreht werden.

Günstig ist es weiterhin, wenn jeweils zwei einander paarweise gegenüberliegende erste Ausnehmungen (oder Gruppen erster Ausnehmungen) auf einer Geraden durch das Zentrum des ersten Lochkreises angeordnet sind. Auf diese Weise wird eine Unwucht wirksam vermieden. Grundsätzlich kann eine Unwucht des Rotors aber auch auf einem anderen Weg vermieden werden.

Besonders vorteilhaft ist es, wenn der Rotor eine auf dem ersten Lochkreis angeordnete erste Ausnehmung aufweist, welche gegenüber einer Polachse eines magnetischen Pols um den halben Staffelungswinkel verdreht ist. Auf diese Weise kann durch Drehen oder Wenden eines Rotorsegments um eine durch die erste Ausnehmung führende Achse um 180° eine Verdrehung von magnetischen Polen zweier benachbarter Rotorsegmente um den Staffelungswinkel erreicht werden. Durch die vorgeschlagenen Maßnahmen werden die Möglichkeiten für die Verdrehung von Rotorsegmenten erhöht.

Besonders vorteilhaft ist es auch, wenn der Rotor eine Gruppe von auf dem ersten Lochkreis angeordneten ersten Ausnehmungen aufweist, wobei eine durch die Rotationsachse des Rotors gehende Symmetrieachse der Gruppe gegenüber einer Polachse eines magnetischen Pols um den halben Staffelungswinkel verdreht ist. Durch Drehen oder Wenden eines Rotorsegments um die Symmetrieachse um 180° ist wiederum eine Verdrehung von magnetischen Polen zweier benachbarter Rotorsegmente um den Staffelungswinkel möglich. Durch die vorgeschlagenen Maßnahmen werden die Möglichkeiten für die Verdrehung von Rotorsegmenten ebenfalls erhöht.

Besonders vorteilhaft ist auch eine Kombination der Patentansprüche 1, 2 und 5. Es ergibt sich dann folgende Anordnung:
Rotor für eine elektrische Maschine, umfassend
- mehrere entlang der Rotationsachse des Rotors hintereinander angeordnete Rotorsegmente, welche jeweils ein Rotorblech oder mehrere Rotorbleche aufweisen, wobei magnetische Pole zweier benachbarter Rotorsegmenten um die Rotationsachse des Rotors um einen Staffelungswinkel gegeneinander verdreht sind und wobei der Staffelungswinkel kleiner ist als ein zwischen zwei magnetischen Polen eines Rotorsegments liegender Polwinkel und
- n/2 Gruppen von auf dem ersten Lochkreis angeordneten ersten Ausnehmungen, welche jeweils eine durch die Rotationsachse des Rotors gehende Symmetrieachse aufweisen und von denen wenigsten n/2-1 Gruppen jeweils um einen Winkel gegeneinander verdreht sind,
- wobei n die Anzahl der magnetischen Pole eines Rotorsegments angibt,
- wobei die Symmetrieachsen verschiedener Gruppen jeweils um einen Winkel gegeneinander verdreht sind, welcher dem Polwinkel abzüglich oder zuzüglich dem Staffelungswinkel entspricht, und
- wobei eine Symmetrieachse einer ersten Gruppe gegenüber einer Polachse eines magnetischen Pols um den halben Staffelungswinkel verdreht ist.

Günstig ist es weiterhin, wenn der Rotor mehrere auf einem zweiten Lochkreis angeordnete zweite Ausnehmungen aufweist, die mit einem Wuchtgewicht bestückbar sind beziehungsweise von denen wenigstens einige mit einem Wuchtgewicht bestückt sind. Durch selektives Besetzen der zweiten Ausnehmungen mit Wuchtgewichten kann der Rotor gewuchtet werden.

Vorteilhaft ist es, wenn mehrere zweite Ausnehmungen im Hinblick auf ihre Winkellage in derselben Weise gegeneinander verdreht sind wie die ersten Ausnehmungen. Auf diese Weise kann sich ein Wuchtgewicht auch über mehrere Rotorsegmente erstrecken. Insbesondere ist es von Vorteil, wenn zumindest zwei zweite Ausnehmungen jeweils um einen Winkel gegeneinander verdreht sind, welcher dem Polwinkel abzüglich oder zuzüglich dem Staffelungswinkel entspricht, und sich das Wuchtgewicht über wenigstens zwei Rotorsegmente erstreckt.

Günstig ist es schließlich auch, wenn die magnetischen Pole der hintereinander angeordneten Rotorsegmente
a) von einem Ende des Rotors ausgehend fortschreitend um jeweils einen Staffelungswinkel in eine erste Richtung gegeneinander verdreht sind oder
b) von einem Ende des Rotors ausgehend bis zur Mitte des Rotors fortschreitend um jeweils einen Staffelungswinkel gegeneinander in eine erste Richtung verdreht sind und von der Mitte des Rotors ausgehend bis zum anderen Ende des Rotors fortschreitend um jeweils einen Staffelungswinkel gegeneinander in eine gegensinnige, zweite Richtung verdreht sind.

Der Fall a) ermöglicht einen besonders einfachen Aufbau des Rotors, der symmetrische Aufbau entsprechend Fall b) bietet gegenüber einem nicht-symmetrischen Aufbau den Vorteil, dass dieser im Betrieb der elektrischen Maschine keine Axialkraft durch die Verdrehung der Rotorsegmente erzeugt.

Die obigen Ausgestaltungen und Weiterbildungen der Erfindung lassen sich auf beliebige Art und Weise kombinieren.

### KURZE BESCHREIBUNG DER FIGUREN

Ausführungsbeispiele der Erfindung sind exemplarisch in den beigefügten schematischen Figuren dargestellt. Es zeigen:
- Fig. 1: eine schematisch im Halbschnitt dargestellte, beispielhafte elektrische Maschine;
- Fig. 2: den Rotor der elektrischen Maschine aus Fig. 1 in Schrägansicht;
- Fig. 3: das vorderste Rotorsegment des Rotors aus Fig. 2 in Vorderansicht;
- Fig. 4: eine Abwandlung des in Fig. 3 dargestellten Rotorsegments, bei dem eine Gruppe erster Ausnehmungen um den halben Staffelungswinkel im Uhrzeigersinn gegenüber einer magnetischen Achse verdreht sind;
- Fig. 5: wie Fig. 4 nur mit einer Verdrehung der Gruppe erster Ausnehmungen im Gegenuhrzeigersinn;
- Fig. 6: einen beispielhaften Rotor mit Rotorsegmenten nach Art der Fig. 4;
- Fig. 7: einen beispielhaften Rotor mit Rotorsegmenten nach Art der Fig. 5;
- Fig. 8: ein Rotorsegment mit zweiten Ausnehmungen für Wuchtgewichte und
- Fig. 9: eine elektrische Maschine mit einem Rotor der vorgeschlagenen Art, welche in ein Fahrzeug eingebaut ist.

### DETAILIERTE BESCHREIBUNG DER ERFINDUNG

Einführend wird festgehalten, dass gleiche Teile in den unterschiedlich Ausführungsformen mit gleichen Bezugszeichen beziehungsweise gleichen Bauteilbezeichnungen versehen werden, gegebenenfalls mit unterschiedlichen Indizes. Die in der Beschreibung enthaltene Offenbarungen eines Bauteils kann sinngemäß ein anderes Bauteil mit gleichem Bezugszeichen beziehungsweise gleicher Bauteilbezeichnung übertragen werden. Auch sind die in der Beschreibung gewählten Lageangaben, wie zum Beispiel "oben", "unten", "hinten", "vorne", "seitlich" und so weiter auf die unmittelbar beschriebene sowie dargestellte Figur bezogen und bei einer Lageänderung sinngemäß auf die neue Lage zu übertragen.

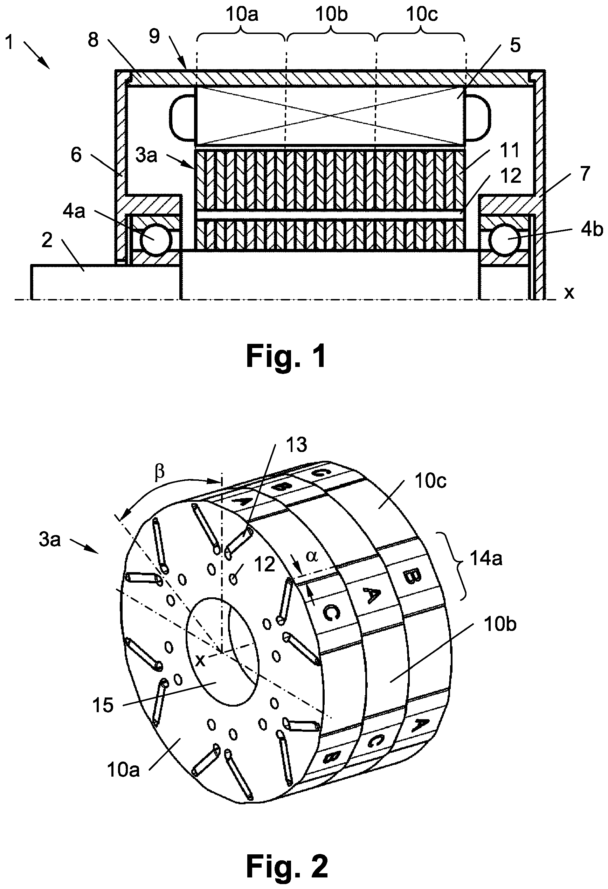

Fig. 1 zeigt einen Halbschnitt durch eine schematisch dargestellte elektrische Maschine 1. Die elektrische Maschine 1 umfasst, eine Welle 2 mit einem darauf sitzenden Rotor 3a, wobei die Welle 2 mit Hilfe von (Wälz)lagern 4a, 4b um eine Drehachse x gegenüber einem Stator 5 drehbar gelagert ist. Der Stator 5 weist in diesem Beispiel mehrere nicht im einzelnen dargestellte Statorbleche, sowie in diesen angeordnete Statorwicklungen auf. Konkret sitzt das erste Lager 4a in einem vorderen Lagerschild 6 und das zweite Lager 4b in einem hinteren Lagerschild 7. Weiterhin umfasst die elektrische Maschine 1 ein (mittleres) Gehäuseteil 8, welches das vordere Lagerschild 8 und das hintere Lagerschild 9 verbindet und den Stator 5 aufnimmt. Das vordere Lagerschild 6, das hintere Lagerschild 7 und das Gehäuseteil 8 bilden in diesem Beispiel das Gehäuse 9 der elektrische Maschine 1.

Der Rotor 3a umfasst mehrere entlang der Rotationsachse x des Rotors 3a hintereinander angeordnete Rotorsegmente 10a..10c, welche jeweils ein Rotorblech 11 oder, so wie das in der Fig. 1 der Fall ist, mehrere Rotorbleche 11 aufweisen. Der Rotor 3a zeigt im Schnitt auch eine durchgehende Bohrung, welche durch erste Ausnehmungen 12 in den einzelnen Rotorblechen 11 gebildet ist.

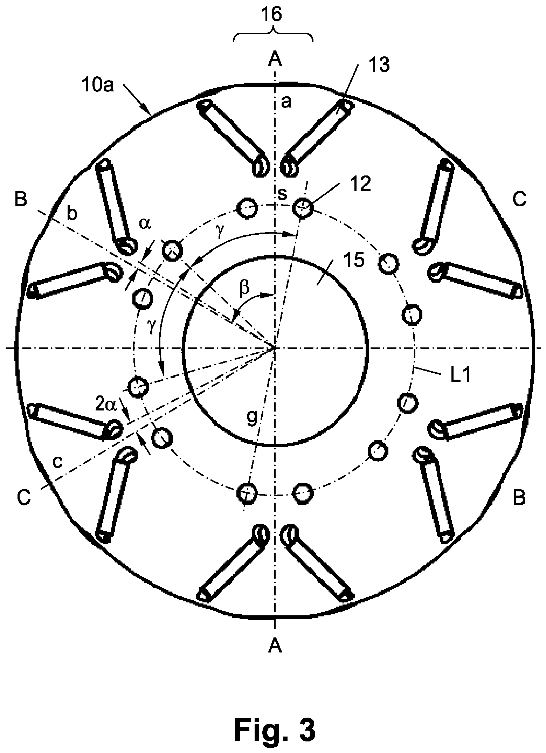

Fig. 2 zeigt den Rotor 3a der elektrischen Maschine 1 nun in Schrägansicht, die Fig. 3 zeigt das erste Rotorsegment 10a des Rotors 3a in Vorderansicht.

Magnetische Pole A..C zweier benachbarter Rotorsegmente 10a..10c sind um die Rotationsachse x des Rotors 3a um einen Staffelungswinkel α gegeneinander verdreht (siehe insbesondere Fig. 3). Der Staffelungswinkel α ist dabei kleiner als ein zwischen zwei magnetischen Polen A..C eines Rotorsegments 10a..10c liegender Polwinkel β, der sich konkret durch Division eines Vollkreises (=360°) durch die Anzahl der magnetischen Pole A..C eines Rotorsegments 10a..10c ergibt. Im vorliegenden Beispiel weist der Rotor 3a sechs magnetische Pole A..C auf. Der Polwinkel β beträgt somit 60°. Die magnetischen Pole A..C liegen jeweils auf Polachsen a..c. Im Bereich der magnetischen Pole A..C befinden sich des weiteren Magnete 13, welche ein Magnetfeld erzeugen.

Das Rotorsegment 3a weist mehrere auf einem ersten Lochkreis L1 um die Rotationsachse x des Rotors 3a angeordnete erste Ausnehmungen 12 auf, die jeweils um einen Winkel γ gegeneinander verdreht sind, welcher dem Polwinkel β abzüglich oder zuzüglich dem Staffelungswinkel α entspricht. Im gezeigten Beispiel entspricht der Winkel γ dem Polwinkel β abzüglich dem Staffelungswinkel α.

In dem Beispiel wird weiterhin angenommen, dass die Rotorsegmente 10a..10c beziehungsweise deren Rotorbleche 11 identisch aufgebaut sind. Werden nun die ersten Ausnehmungen 12, welche dem magnetische Pol B zugeordnet sind, in Deckung mit den ersten Ausnehmungen 12 gebracht, welche dem magnetischen Pol A zugeordnet sind, dann ergibt sich die in Fig. 2 gut sichtbare Verdrehung zwischend dem ersten Rotorsegment 10a und dem zweiten Rotorsegment 10b. Werden weiterhin die ersten Ausnehmungen 12, welche dem magnetischen Pol C zugeordnet sind, in Deckung mit den ersten Ausnehmungen 12 gebracht, welche dem magnetischen Pol B zugeordnet sind, dann ergibt sich zudem die in Fig. 2 gut sichtbare Verdrehung zwischend dem zweiten Rotorsegment 10b und dem dritten Rotorsegment 10c. Die magnetischen Pole A..C ergeben in Summe eine sich in Längsrichtung des Rotors 3a erstreckende Polanordnung 14a. Ergänzend ist in den Fig. 2 und 3 auch die Wellenbohrung 15 des Rotors 3a gut sichtbar.

An dieser Stelle wird angemerkt, dass die magnetischen Pole A..C einer sich in Längsrichtung erstreckenden Polanordnung 14a magnetisch gleich orientiert sind. Die Vektoren der magnetischen Pole A..C der jeweiligen sich in Längsrichtung erstreckenden Polanordnung 14a weisen daher alle aus dem Rotor 3a heraus oder zeigen in diesen hinein. Die Polanordnung 14a, die auf der Polachse a..c in Bezug auf die Drehachse x gegenüberliegt, ist umgekehrt magnetisiert. Durch die Verdrehung ("Skewing") der Rotorsegmente 10a..10c ergibt sich im Betrieb der elektrischen Maschine 1 ein Drehmomentverlauf, welcher gegenüber dem Drehmomentverlauf einer elektrischen Maschine mit axial ausgerichteten Rotorsegmenten 10a..10c geringere Drehmomentschwankungen aufweist.

In dem obigen Beispiel wurde angenommen, dass die Rotorsegmente 10a..10c beziehungsweise deren Rotorbleche 11 identisch aufgebaut sind Dies ist zwar von Vorteil, jedoch nicht unbedingt zwingend. Für die angegebene Funktion ist es ausreichend, wenn die Rotorsegmente 10a..10c beziehungsweise deren Rotorbleche 11 erste Ausnehmungen 12 aufweisen, die in der angegebenen Weise angeordnet sind. Die ersten Ausnehmungen 12 müssen auch nicht in örtlicher Nähe zu den magnetischen Polen A..C angeordnet sein, sondern können in beliebiger Winkellage zu diesen angeordnet sein.

In dem Beispiel liegen auch jeweils zwei einander paarweise gegenüberliegende erste Ausnehmungen 12 auf einer Geraden g durch das Zentrum des ersten Lochkreises L1. Auf diese Weise wird eine Unwucht vermieden. Denkbar ist aber auch, dass eine Unwucht mithilfe von anderen Maßnahmen vermieden wird und paarweise gegenüberliegende erste Ausnehmungen 12 nicht auf einer Geraden g liegen.

Grundsätzlich ist es ausreichend, wenn zwei erste Ausnehmungen 12 jeweils um einen Winkel γ gegeneinander verdreht sind, welcher dem Polwinkel β abzüglich oder zuzüglich dem Staffelungswinkel α entspricht. Dadurch können zwei Rotorsegmente 10a..10c um den Staffelungswinkel α gegeneinander verdreht werden.

Von Vorteil ist es jedoch, wenn das Rotorsegment 10a, wie in dem gezeigten Beispiel, (zumindest) n/2 auf dem ersten Lochkreis L1 angeordnete erste Ausnehmungen 12 aufweist, von denen wenigstens n/2-1 erste Ausnehmungen 12 jeweils um den Winkel γ gegeneinander verdreht sind, welcher dem Polwinkel β abzüglich oder zuzüglich dem Staffelungswinkel α entspricht. Dadurch können alle Rotorsegmente 10a..10c jeweils um den Staffelungswinkel α gegeneinander verdreht werden.

An dieser Stelle wird angemerkt, dass das Rotorsegment 10a Gruppen 16 von ersten Ausnehmungen 12 aufweist. Konkret sind jeweils zwei erste Ausnehmungen 12 zu einer Gruppe 16 zusammengefasst. Eine Symmetrieachse s der Gruppe 16, welche dem magnetischen Pol A zugeordnet ist, fällt in diesem Beispiel mit der Polachse a des magnetischen Pols A zusammen. Die oben für die einzelnen ersten Ausnehmungen 12 erwähnten Maßnahmen und daraus resultierenden Vorteile gelten sinngemäß auch für die Gruppen 16.

Das Rotorsegment 10a weist zumindest n/2 Gruppen 16 erster Ausnehmungen 12 auf, die jeweils um einen Winkel γ gegeneinander verdreht sind, welcher dem Polwinkel β abzüglich dem Staffelungswinkel α entspricht, wobei n wiederum die Anzahl der magnetischen Pole A..C eines Rotorsegments 3a angibt. Des weiteren liegen jeweils zwei Gruppen 16 einander paarweise auf einer Geraden (hier auf der Symmetrieachse s) durch das Zentrum des ersten Lochkreises L1 gegenüber.

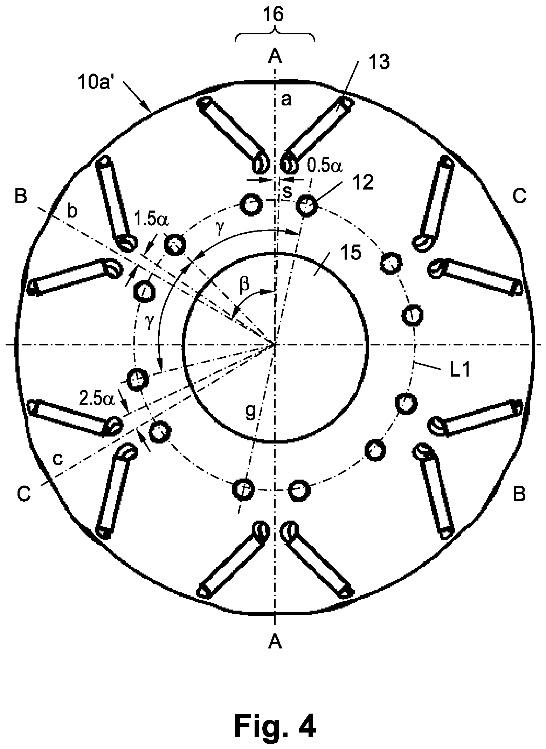

Fig. 4 zeigt nun eine Ausführungsform eines Rotorsegments 10a', welche dem Rotorsegment 10a aus Fig. 3 sehr ähnlich ist. Wie das Rotorsegment 10a aus Fig. 3 weist auch das Rotorsegment 10a' aus Fig. 4 Gruppen 16 von auf dem ersten Lochkreis L1 angeordneten ersten Ausnehmungen 12 auf. Konkret sind wiederum jeweils zwei Ausnehmungen 12 zu einer Gruppe 16 zusammengefasst. Im Unterschied zum Rotorsegment 10a aus Fig. 3 umfasst das Rotorsegment 10a' aus Fig. 4 jedoch eine Gruppe 16, bei der eine durch die Rotationsachse x des Rotors 3a..3c gehende Symmetrieachse s der Gruppe 16 gegenüber der Polachse a des magnetischen Pols A um den halben Staffelungswinkel 0.5α verdreht ist, konkret im Uhrzeigersinn. Diese Maßnahme ermöglicht eine Verdrehung von zwei Rotorsegmenten 10a..10c um den Staffelungswinkel α oder ein Vielfaches davon, wenn die Verdrehung wie zu Fig. 3 beschrieben vorgenommen wird oder um den Staffelungswinkel α in die Gegenrichtung, wenn ein Rotorsegment 10a um 180° um die Symmetrieachse s der Gruppe 16 gedreht beziehungsweise gewendet wird. Bei zusätzlicher, anschließender Verdrehung um den Winkel γ können ebenfalls Vielfache des Staffelungswinkels α erreicht werden. Das in der Fig. 4 dargestellte Rotorsegment 10a' ist ein Beispiel für ein Rotorsegment, bei dem n/2 erste Ausnehmungen 12 jeweils um den Winkel γ gegeneinander verdreht sind. Konkret weist das Rotorsegment 10a' sechs magnetische Pole A..C auf, und es gibt drei Ausnehmungen 12 (beziehungsweise hier sogar Gruppen 16), die jeweils um den Winkel γ gegeneinander verdreht sind (die gegenüberliegenden Gruppen 16 sind bei dieser Aufstellung nicht mitgerechnet).

Die Ausführungsform der Fig. 4 ermöglicht ausgehend von der Polachse a eine Verdrehung um -α, -2α, +α, +2α und +3α, wobei positive Werte eine Verdrehung im Uhrzeigersinn und negative Werte eine Verdrehung im Gegenuhrzeigersinn bedeuten. Negative Werte werden bei dieser Ausführungsform ohne Wenden erreicht, positive Werte inkludieren ein Wenden des Rotorsegments 10a'. Die untenstehende Tabelle gibt dies nochmals in übersichtlicher Form an, wobei gewendete Rotorsegmente 10a' mit einem "-" vor dem entsprechenden magnetischen Pol A..C angegeben werden.

| C | B | A | -A | -B | -C |
|---|---|---|---|---|---|
| -2α | -α | 0° | +α | +2α | +3α |

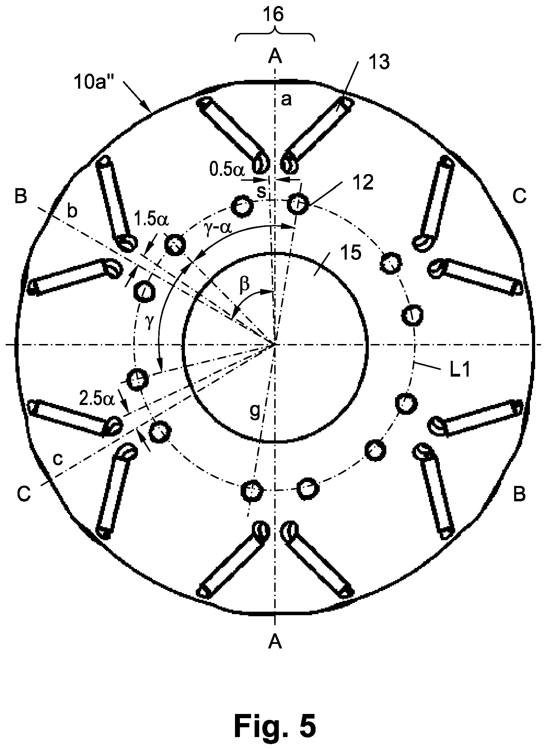

Fig. 5 zeigt eine Ausführungsform eines Rotorsegments 10a", welche dem Rotorsegment 10a' aus Fig. 4 sehr ähnlich ist. Im Unterschied dazu, ist die dem magnetischen Pol A zugeordnete Gruppe 16 jedoch in die Gegenrichtung verdreht, nämlich um den Winkel 0.5α gegen den Uhrzeigersinn. Dadurch ergibt sich folgende, mögliche Abfolge der magnetischen Pole A..C.

| C | B | -A | A | -B | -C |
|---|---|---|---|---|---|
| -3α | -2α | -α | 0° | +α | +2α |

Das in der Fig. 5 dargestellte Rotorsegment 10a" ist ein Beispiel für ein Rotorsegment, bei dem (zumindest) n/2-1 erste Ausnehmungen 12 jeweils um den Winkel γ gegeneinander verdreht sind. Konkret weist das Rotorsegment 10a' sechs magnetische Pole A..C auf, und es gibt zwei Ausnehmungen 12 (beziehungsweise Gruppen 16), die jeweils um den Winkel γ gegeneinander verdreht sind (die gegenüberliegenden Gruppen 16 sind bei dieser Aufstellung wiederum nicht mitgerechnet).

Grundsätzlich sind auch noch andere, nicht im Detail dargestellte Anordnungen möglich. Insbesondere können die Tabellen bei größerer Anzahl von magnetischen Polen A..C verlängert, bei einer geringeren Anzahl verkürzt werden. Unten sind die Tabellen für magnetische Pole A..D nach Art der Fig. 4 und darunter nach Art der Fig. 5 angegeben

| D | C | B | A | -A | -B | -C | -D |
|---|---|---|---|---|---|---|---|
| -3α | -2α | -α | 0° | +α | +2α | +3α | +4α |

| D | C | B | -A | A | -B | -C | -D |
|---|---|---|---|---|---|---|---|
| -4α | -3α | -2 | -α | 0° | +α | +2α | +3α |

Eine Gruppe 16 umfasst in den gezeigten Beispielen jeweils zwei erste Ausnehmungen 12. Dies ist aber keine zwingende Bedingung, sondern eine Gruppe 16 kann im Grunde jede beliebige Anzahl mehrerer ersten Ausnehmungen 12 aufweisen. Die ersten Ausnehmungen 12 einer Gruppe 16 sollten jedoch bei einem Wenden des Rotorsegments 10a um 180° um die Symmetrieachse s vorzugsweise deckungsgleich bleiben.

Denkbar ist in einer Abwandlung der in Fig. 4 und 5 gezeigten Beispiele auch, dass bloß eine auf dem ersten Lochkreis L1 angeordnete erste Ausnehmung 12 gegenüber einer Polachse a eines magnetischen Pols A um den halben Staffelungswinkel 0.5α verdreht ist.

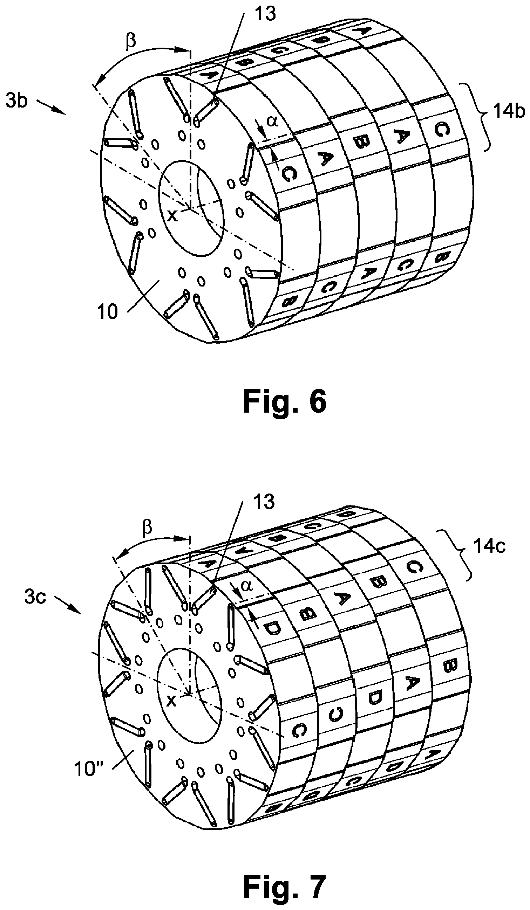

Die Fig. 6 zeigt nun ein weiteres Ausführungsbeispiel eines Rotors 3b, welcher dem in Fig. 3 gezeigten Rotor sehr ähnlich ist. Im Unterschied dazu weist der Rotor 3b fünf Rotorsegmente 10 auf, die symmetrisch verdreht sind. Das heißt mit anderen Worten, dass die magnetischen Pole A..C der hintereinander angeordneten Rotorsegmente 10a..10c im Falle der Fig. 3 von einem Ende des Rotors 3a ausgehend fortschreitend um jeweils einen Staffelungswinkel α in eine erste Richtung gegeneinander verdreht sind und im Falle der Fig. 6 von einem Ende des Rotors 3b ausgehend bis zur Mitte des Rotors 3b fortschreitend um jeweils einen Staffelungswinkel α gegeneinander in eine erste Richtung verdreht sind und von der Mitte des Rotors 3b ausgehend bis zum anderen Ende des Rotors 3b fortschreitend um jeweils einen Staffelungswinkel α gegeneinander in eine gegensinnige, zweite Richtung verdreht sind. Ein symmetrischer Aufbau nach dem Muster der Fig. 6 bietet gegenüber einem nicht-symmetrischen Rotor 3a den Vorteil, dass dieser im Betrieb der elektrischen Maschine 1 keine Axialkraft durch die Verdrehung der Rotorsegmente 10 erzeugt.

Fig. 7 zeigt ein Beispiel für einen Rotor 3c, welcher mit Hilfe von Rotorsegmenten 10" nach dem Muster von Fig. 5 aufgebaut ist, bei dem eine Gruppe 16 von ersten Ausnehmungen 12 gegenüber einer Polachse a eines magnetischen Pols A um den halben Staffelungswinkel 0.5α gegen den Uhrzeigersinn verdreht ist. Im Unterschied dazu, weist der Rotor 3c aber acht magnetische Pole A..D auf. Wie aus der Fig. 7 erkennbar ist, sind die fünf Rotorsegmente 10" des Rotors 3c jeweils um den Staffelungswinkel α verdreht, und zwar von einem Ende des Rotors 3c ausgehend fortschreitend in eine erste Richtung. Die Anordnung der magnetischen Pole A..D entspricht einem Ausschnitt der Tabelle zu Fig. 5, wobei die Anordnung der magnetischen Pole A..D in der Ansicht in Fig. 7 in umgekehrter Reihenfolge erfolgt. Von der Rückseite gesehen würde sie direkt der untenstehenden Tabelle entsprechen.

| D | C | B | -A | A |
|---|---|---|---|---|
| -4α | -3α | -2α | -α | 0° |

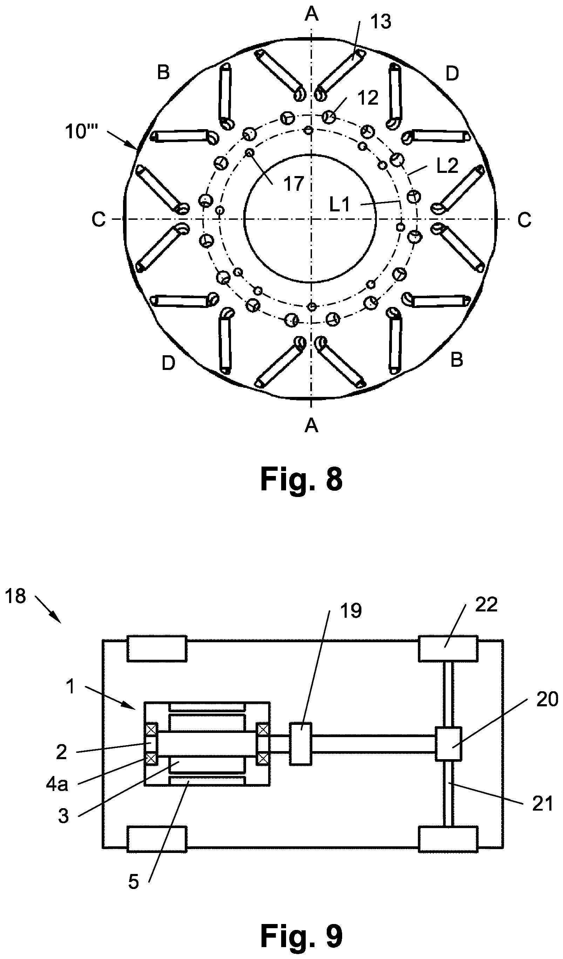

Fig. 8 zeigt ein Rotorsegment 10"', welches eine Abwandlung des Rotorsegments 10" ist, das für den in der Fig. 7 dargestellten Rotor 3c verwendet wird. Konkret weist das Rotorsegment 10'" mehrere auf einem zweiten Lochkreis L2 angeordnete zweite Ausnehmungen 17 auf, die mit einem Wuchtgewicht bestückbar sind oder von denen wenigstens einige mit einem Wuchtgewicht bestückt sind. Durch selektives Bestücken der zweiten Ausnehmungen 17 mit einem Wuchtgewicht kann der Rotor 3c gewuchtet werden.

Günstig ist es, wenn hinsichtlich eines Winkelversatzes mehrerer zweiter Ausnehmungen 17 dieselben Maßnahmen getroffen werden wie für die ersten Ausnehmungen 12.

Beispielsweise können zumindest zwei zweite Ausnehmungen 17 jeweils um einen Winkel γ gegeneinander verdreht sein, welcher dem Polwinkel β abzüglich oder zuzüglich dem Staffelungswinkel α entspricht. Auf diese Weise kann sich ein Wuchtgewicht über wenigstens zwei Rotorsegmente 10a..10c erstrecken.

An dieser Stelle wird auch angemerkt, dass es möglich ist, die ersten Ausnehmungen 12 nur während der Herstellung des Rotors 3a..3c mit entsprechenden Stiften zum Ausrichten der Rotorsegmente 10a..10c zu bestücken, dass es aber auch möglich ist, dass diese Stifte dauerhaft in den ersten Ausnehmungen 12 verbleiben und eine unerwünschte Verdrehung der Rotorsegmente 10a..10c im Betrieb der elektrischen Maschine 1 verhindern. Die genannten Stifte können insbesondere auch als Zuganker ausgebildet sein, welche den Rotor 3a..3c auch axial sichern. Selbstverständlich können aber auch gesonderte Zuganker dafür vorgesehen sein, oder es können auch andere Maßnahmen zur axialen Sicherung des Rotors 3a..3c angewandt werden.

Die Fig. 9 zeigt schließlich die in ein Fahrzeug 18 eingebaute elektrische Maschine 1. Das Fahrzeug 18 weist wenigstens zwei Achsen auf, von denen wenigstens eine angetrieben ist. Konkret ist der Elektromotor 1 mit einem optionalen Getriebe 19 und einem Differentialgetriebe 20 verbunden. An das Differentialgetriebe 20 schließen die Halbachsen 21 der Hinterachse an. An den Halbachsen 21 sind schließlich die angetriebenen Räder 22 montiert. Der Antrieb des Fahrzeugs 18 erfolgt zumindest teilweise oder zeitweise durch die elektrische Maschine 1. Das heißt, die elektrische Maschine 1 kann zum alleinigen Antrieb des Fahrzeugs 22 dienen oder zum Beispiel im Verbund mit einer Verbrennungskraftmaschine vorgesehen sein (Hybridantrieb).

Abschließend wird festgehalten, dass der Schutzbereich durch die Patentansprüche bestimmt ist. Die Beschreibung und die Zeichnungen sind jedoch zur Auslegung der Ansprüche heranzuziehen. Die in den Figuren enthaltenen Merkmale können beliebig ausgetauscht und miteinander kombiniert werden. Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

## Patentansprüche

1. Rotor (3a..3c) für eine elektrische Maschine (1), umfassend
- mehrere entlang der Rotationsachse (x) des Rotors (3a..3c) hintereinander angeordnete Rotorsegmente (10a..10c, 10a', 10a", 10..10'"), welche jeweils ein Rotorblech (11) oder mehrere Rotorbleche (11) aufweisen, wobei magnetische Pole (A..D) zweier benachbarter Rotorsegmente (10a..10c, 10a', 10a", 10..1 0"') um die Rotationsachse (x) des Rotors (3a..3c) um einen Staffelungswinkel (α) gegeneinander verdreht sind und wobei der Staffelungswinkel (α) kleiner ist als ein zwischen zwei magnetischen Polen (A..D) eines Rotorsegments (10a..10c, 10a', 10a", 10..10"') liegender Polwinkel (β),
**gekennzeichnet durch**
zumindest zwei auf einem ersten Lochkreis (L1) um die Rotationsachse (x) des Rotors (3a..3c) angeordnete erste Ausnehmungen (12), die jeweils um einen Winkel (γ) gegeneinander verdreht sind, welcher dem Polwinkel (β) abzüglich oder zuzüglich dem Staffelungswinkel (α) entspricht.

2. Rotor (3a..3c) nach Anspruch 1, **gekennzeichnet durch** zumindest n/2 auf dem ersten Lochkreis (L1) angeordnete erste Ausnehmungen (12), von denen wenigstens n/2-1 erste Ausnehmungen (12) jeweils um einen Winkel (γ) gegeneinander verdreht sind, welcher dem Polwinkel (β) abzüglich oder zuzüglich dem Staffelungswinkel (α) entspricht, wobei n die Anzahl der magnetischen Pole (A..D) eines Rotorsegments (10a..10c, 10a', 10a", 10..10"') angibt.

3. Rotor (3a..3c) nach Anspruch 1 oder 2, **dadurch gekennzeichnet, dass** jeweils zwei einander paarweise gegenüberliegende erste Ausnehmungen (12) auf einer Geraden (g) durch das Zentrum des ersten Lochkreises (L1) angeordnet sind.

4. Rotor (3a..3c) nach einem der Ansprüche 1 bis 3, **gekennzeichnet durch** eine auf dem ersten Lochkreis (L1) angeordnete erste Ausnehmung (12), welche gegenüber einer Polachse (a..c) eines magnetischen Pols (A..D) um den halben Staffelungswinkel (0.5α) verdreht ist.

5. Rotor (3a..3c) nach einem der Ansprüche 1 bis 3, **gekennzeichnet durch** eine Gruppe von auf dem ersten Lochkreis angeordneten ersten Ausnehmungen (12), wobei eine durch die Rotationsachse (x) des Rotors (3a..3c) gehende Symmetrieachse (s) der Gruppe (16) gegenüber einer Polachse (a..c) eines magnetischen Pols (A..D) um den halben Staffelungswinkel (0.5α) verdreht ist.

6. Rotor (3a..3c) nach einem der Ansprüche 1 bis 5, **gekennzeichnet durch** mehrere auf einem zweiten Lochkreis (L2) angeordnete zweite Ausnehmungen (17), von denen wenigstens einige mit einem Wuchtgewicht bestückt sind.

7. Rotor (3a..3c) nach Anspruch 6, **dadurch gekennzeichnet, dass** zumindest zwei zweite Ausnehmungen (17) jeweils um einen Winkel gegeneinander verdreht sind, welcher dem Polwinkel (β) abzüglich oder zuzüglich dem Staffelungswinkel (α) entspricht, und dass sich das Wuchtgewicht über wenigstens zwei Rotorsegmente (10a..10c, 10a', 10a", 10..1 0"') erstreckt.

8. Rotor (3a..3c) nach einem der Ansprüche 1 bis 7, **dadurch gekennzeichnet, dass** die magnetischen Pole (A..D) der hintereinander angeordneten Rotorsegmente (10a..10d)
a) von einem Ende des Rotors (3a..3c) ausgehend fortschreitend um jeweils einen Staffelungswinkel (α) in eine erste Richtung gegeneinander verdreht sind oder
b) von einem Ende des Rotors (3a..3c) ausgehend bis zur Mitte des Rotors (3a..3c) fortschreitend um jeweils einen Staffelungswinkel (α) gegeneinander in eine erste Richtung verdreht sind und von der Mitte des Rotors (3a..3c) ausgehend bis zum anderen Ende des Rotors (3a..3c) fortschreitend um jeweils einen Staffelungswinkel (α) gegeneinander in eine gegensinnige, zweite Richtung verdreht sind.

9. Elektrische Maschine (1) mit einem Stator (5), **gekennzeichnet durch** einen Rotor (3a..3c) nach einem der Ansprüche 1 bis 9, der gegenüber dem Stator (5) um die Rotationsachse (x) des Rotors (3a..3c) drehbar gelagert ist.

10. Fahrzeug (18) mit wenigstens zwei Achsen, von denen wenigstens eine angetrieben ist, **dadurch gekennzeichnet dass** der besagte Antrieb zumindest teilweise oder zeitweise durch die elektrische Maschine (1) nach Anspruch 9 erfolgt.
